# FASCICULE DE BREVET EUROPEEN

(11) **EP 0 710 145 B1**
(45) Date de publication et mention de la délivrance du brevet: **07.10.1998**
(21) Numéro de dépôt: 94922276.4
(22) Date de dépôt: 19.07.1994
(51) Int. Cl.: B01D 27/00, B01D 27/04

(54) **DISPOSITIF DE FILTRATION POUR CIRCUIT FRIGORIFIQUE ET PROCEDE DE FABRICATION D'UN TEL DISPOSITIF**
FILTRIERVORRICHTUNG FUER EINE KÜHLANORDNUNG UND HERSTELLVERFAHREN EINER SOLCHEN VORRICHTUNG
REFRIGERATION CIRCUIT FILTERING DEVICE AND METHOD FOR MAKING SAME

(30) Priorité: 19.07.1993 FR 9308834
(43) Date de publication de la demande: 08.05.1996
(73) Titulaire: MANULI AUTO FRANCE, 28000 Chartres (FR)
(72) Inventeur: BARON, Daniel, F-28630 Fontenay-sur-Eure (FR); SENE, Philippe, F-78730 Ponthevrard (FR)
(74) Mandataire: Benech, Frédéric
(86) Numéro de dépôt international: FR9400902
(87) Numéro de publication internationale: WO9503110

(56) Documents cités:
- GB-A- 758 361
- US-A- 2 858 026
- US-A- 3 872 008

## Description

La présente invention concerne les dispositifs de filtration pour circuit de fluide réfrigérant du type comprenant un corps creux muni d'un côté d'un fond et présentant de l'outre côté une ouverture fermée par une pièce d'obturation, ladite pièce d'obturation comportant un orifice de sortie du fluide.

Elle concerne également un procédé de fabrication d'un dispositif de ce type.

Elle trouve une application particulièrement importante bien que non exclusive dans le domaine des bouteilles déshydratantes pour circuit de climatisation de véhicule automobile.

On connaît déjà des dispositifs de filtration pour circuits frigorifiques du type ci-dessus défini. De tels dispositifs contiennent un groupe filtrant capable de retenir les impuretés et l'eau contenue dans le fluide réfrigérant.

Le groupe filtrant est de forme annulaire, traversée par une tubulure plongeante de diamètre réduit en communication avec l'orifice de sortie en aval du groupe filtrant.

Une telle disposition présente des inconvénients. En particulier, elle nécessite la fabrication d'un réservoir poreux spécifique de forme annulaire contenant le matériau filtrant.

Ce réservoir doit de plus être introduit dans le corps creux, autour de la tubulure de diamètre réduit, ce qui pose des problèmes de fabrication.

Les dispositifs connus sont par ailleurs en général constitués par des pièces en acier ou en aluminium, soudées entre elles selon la technique TIG, ce qui risque d'endommager le matériau du groupe filtrant sensible à la température, lors de la fabrication.

Le document US-A-2 858 026 décrit un dispositif conforme au préambule de la revendication 1.

Il ne permet cependant pas de prendre en compte le vieillissement de la partie filtrante sans avoir à changer la cartouche filtrante.

Le présente invention vise à fournir un dispositif répondant mieux que ceux antérieurement connus aux exigences de la pratique, notamment en ce qu'elle autorise une fabrication ne risquant pas d'endommager le matériau filtrant, simple à mettre en oeuvre, utilisant moins de pièces que dans l'art antérieur, et mettant en oeuvre des matériaux tels que les alliages d'aluminium, nettement plus légers.

Dans ce but, l'invention propose notamment un dispositif de filtration pour circuit de fluide réfrigérant selon la revendication 1.

Dans des modes de réalisation avantageux, on a de plus recours à l'une et/ou à l'autre des dispositions suivantes :
- la tubulure est de section transversale cylindrique au droit du tamis filtrant, de dimension comprise entre de l'ordre du tiers et de l'ordre des neuf dixièmes de la section interne du corps creux ;
- le corps creux est une première demi-coque munie d'une paroi cylindrique et la pièce d'obturation est une seconde demi-coque formée d'une seule pièce par un fond et une paroi cylindrique introduite à frottement dans la première demi-code à laquelle elle est fixée par collage, la première demi-coque étant sertie sur la périphérie du fond de la deuxième demi-coque ;
- la portion d'extrémité de la paroi périphérique de la deuxième demi-coque est en contact ou sensiblement en contact avec la surface interne du fond de la première demi-coque ;
- le dispositif comporte de plus au moins un joint torique en élastomère d'étanchéité entre le corps creux et la pièce d'obturation ;
- l'orifice de sortie est en communication avec un canal intérieur dans lequel est disposé un indicateur visuel du taux d'humidité du fluide réfrigérant ou un indicateur du remplissage du circuit ;
- la pièce d'obturation comporte l'orifice d'entrée du fluide réfrigérant, qui communique avec l'espace annulaire délimité d'une part par la paroi interne du corps creux, ou de la seconde demi-coque s'il y a lieu, et d'autre part par la paroi externe de la tubulure ;
- le corps creux et la pièce d'obturation sont en alliage d'aluminium ;
- la tubulure est en matière plastique ;
- le dispositif comporte des moyens à ressort de compression du tamis filtrant entre le fond du corps creux et une butée interne à ladite tubulure.

L'invention propose également un procédé de fabrication d'un dispositif de filtration d'un fluide réfrigérant tel que défini par la revendication 11.

Avantageusement, le corps creux étant une première demi-coque munie d'une paroi cylindrique et la pièce d'obturation une seconde demi-coque formée d'une seule pièce par un fond et une paroi cylindrique
on enduit au moins en partie de colle polymérisable la surface interne ou externe d'au moins une des deux demi-coques,
on introduit la demi-coque dite interne, dans l'autre demi-coque dite externe, avec laquelle elle coopère à frottement ou sensiblement à frottement, jusqu'à venir sensiblement en butée contre le fond de ladite demi-coque externe, et
on sertit l'extrémité de la demi-coque externe sur le fond de la demi-coque interne.

La présente invention sera mieux comprise à la lecture de la description qui suit des modes de réalisation particuliers donnés à titre d'exemples non limitatifs.

La description se réfère aux dessins qui l'accompagnent dans lesquels :
- La figure 1 est une vue latérale en partie en coupe axiale, d'un premier mode de réalisation d'un dispositif selon l'invention.
- La figure 2 est une vue en coupe selon II-II de la figure 1.
- La figure 3 est une vue en coupe selon III-III de la pièce d'obturation de la figure 1.
- La figure 4 est une vue de dessus du dispositif de la figure 1.
- La figure 5 est une vue latérale, en coupe, d'un deuxième mode de réalisation d'un dispositif selon l'invention.

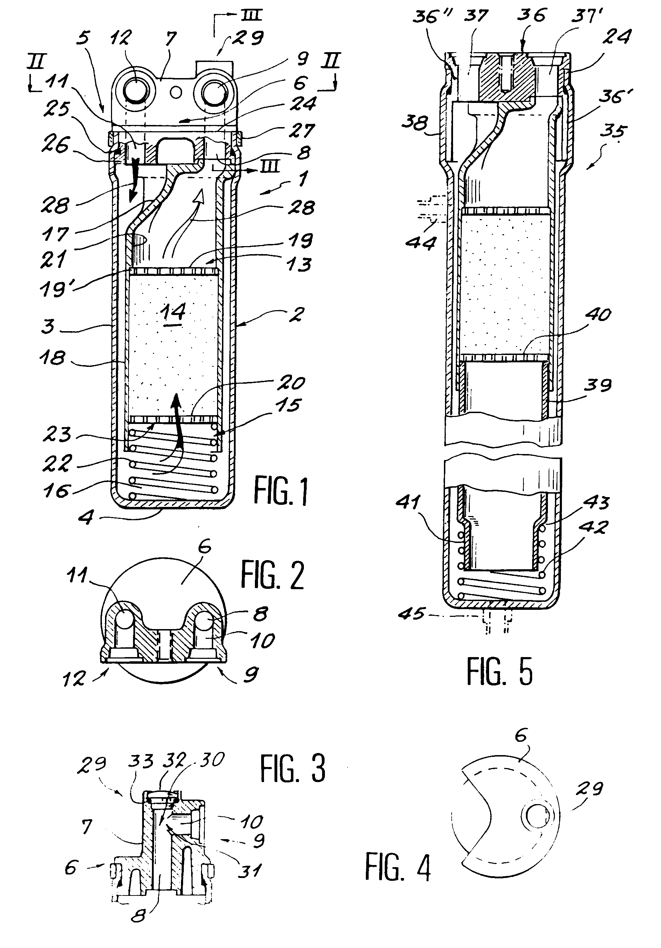

La figure 1 montre un dispositif 1 selon un premier mode de réalisation de l'invention.

Le dispositif 1 comporte un corps creux 2 en alliage d'aluminium, formé d'une paroi cylindrique 3 par exemple de 1 à 3 mm d'épaisseur, muni d'un côté d'un fond 4 formé d'une seule pièce avec la paroi 3 par exemple par filage par choc.

Le corps creux présente de l'autre côté une ouverture 5 fermée par une pièce d'obturation 6, également en alliage d'aluminium, de forme sensiblement cylindrique au niveau de l'obturation et comportant une portion supérieure de raccordement 7 avec des tubulures d'entrée et de sortie du fluide réfrigérant.

Le liquide est par exemple un fluide frigorigène du type connu sous les références HFA134A ou CFC12.

La pièce 6 comprend un orifice 8 de sortie du fluide, agencé pour être connecté à angle droit en 9, par l'intermédiaire d'un canal présentant un coude à angle droit 10 (voir figure 2), de façon étanche et connue en elle-même, avec un tuyau de sortie (non représenté).

La pièce 6 comprend également un orifice 11 d'entrée du liquide dans le corps creux, agencé pour être connecté à angle droit en 12, de façon identique au tuyau de sortie, à un tuyau d'entrée (non représenté).

L'orifice de sortie 8 est par ailleurs connecté, du côté du corps creux, à une tubulure 13 contenant le tamis filtrant 14.

L'extrémité 15 de la tubulure, opposée à la pièce 6, est quant-à-elle directement reliée à l'espace 16 situé à proximité du fond 4 du corps creux.

La tubulure est par exemple réalisée en matière plastique, par exemple en polyamide connu sous la dénomination 6-6, chargé à de l'ordre de 30 % en poids de fibres de verre . Elle présente une partie 17 en entonnoir, qui réalise la connexion avec l'orifice 8.

La partie 17 est reliée à une portion principale 18 de la tubulure, présentant une section transversale cylindrique constante jusqu'à son extrémité 15, et incluant notamment le tamis filtrant.

La dimension du diamètre externe de cette tubulure est par exemple comprise entre un tiers et de l'ordre de 9/10e du diamètre interne du corps creux.

Le tamis filtrant 14 comporte un tamis moléculaire, par exemple constitué, de façon connue en elle-même, par une couche de billes en aluminosilicate, en sandwich entre une grille supérieure constituée, du haut vers le bas, par une plaque à trous en matériau identique à la tubulure, un tamis en laiton et une feuille de feutre de 1 à 3 mm d'épaisseur, et une grille inférieure 20 constituée de façon identique, mais dans l'ordre inverse, à la grille supérieure.

La grille 19 vient en butée vers le haut contre un épaulement cylindrique 19' usiné sur la paroi interne 21 de la tubulure 13.

La grille 20 est quant à elle comprimée, par exemple, par un ressort à boudin 22 prenant appui sur le fond 4 d'un côté et sur la paroi inférieure 23 de la grille 20 de l'autre côté.

De cette façon, les variations de volume du matériau filtrant (tassement) pendant le fonctionnement de la bouteille déshydratante sont prises en compte.

La tubulure 13 est fixée à l'entrée de l'orifice 8, sur la paroi inférieure de la pièce d'obturation 6, par exemple par collage avec une colle du type connu sous la dénomination "Loctite" ou équivalent, ou/et par déformation de la pièce 6 par exemple suivant 3 points.

L'orifice d'entrée 10 est quant-à-lui en communication directe avec l'espace annulaire délimité par la paroi interne du corps creux et par la paroi externe de la tubulure.

La pièce d'obturation 6 comprend une collerette annulaire périphérique 24, qui sépare la partie d'obturation proprement dite, enfoncée dans l'ouverture 5 du corps creux, de la portion supérieure 7 de raccordement avec les tuyaux d'entrée et de sortie du fluide réfrigérant.

La collerette périphérique 24 vient en butée contre le bord supérieur de ladite ouverture.

Dans le mode de réalisation plus particulièrement décrit ici, il est prévu un joint torique d'étanchéité 25, par exemple en matériau élastomère du type connu sous la dénomination VITON.

Ces joints sont enfilés sur l'extrémité de la pièce d'obturation située du côté du corps creux par rapport à l'excroissance 24, et sont placés en appui de part et d'autre d'un épaulement annulaire 26 en excroissance par rapport à ladite partie de pièce.

La pièce d'obturation 6 est par ailleurs fixée à l'extrémité du corps creux par un ou plusieurs cordons de colle par exemple du type connue sous la dénomination KÖMMERLING, sous la référence CORAPOX 562L2, ou par l'intermédiaire d'une fine pellicule de ladite colle répartie sur la face interne de la périphérie de l'extrémité du corps creux ou de la face externe de la pièce en vis à vis.

L'extrémité du corps creux est ensuite sertie sur la périphérie de ladite pièce introduite dans l'ouverture, l'excroissance latérale 24 venant en butée sur le corps creux.

Un anneau cylindrique 27 de sertissage externe est par exemple prévu. Il s'insère entre la collerette 24 et une excroissance latérale 25 de l'extrémité du corps creux, due à la déformation de ladite extrémité lors du sertissage sur l'épaulement 26.

On va maintenant décrire le fonctionnement du dispositif.

La filtration/déshydratation du fluide réfrigérant s'effectue de la façon suivante.

Le fluide entre dans le dispositif par l'orifice 12 de la pièce d'obturation 6 et pénètre dans l'espace annulaire externe à la tubulure (flèche 28).

Il passe à l'extérieur et le long de la tubulure, puis entre au travers du ressort 22, à l'intérieur de ladite tubulure.

Il pénètre alors le tamis filtrant où il se sépare de ses traces d'humidité et des particules solides, puis sort du dispositif via l'orifice de sortie 8.

Avantageusement il est prévu un indicateur 29 du taux d'humidité du fluide réfrigérant, en sortie, permettant d'apprécier la saturation du tamis moléculaire, et/ou un voyant de remplissage.

Cet indicateur est situé en aval du tamis filtrant, par exemple (voir figure 3) au droit du canal intérieur 30 de l'orifice 8 avant le coude perpendiculaire 31 de sortie latérale du fluide en 9. Cet indicateur est alors incorporé dans la pièce d'obturation 6.

Dans le mode représenté, il est en communication visuelle avec l'extérieur via un élément transparent 32, par exemple en verre coulé. L'élément 33 constituant l'indicateur est placé et fixé en dessous. Il est agencé pour changer de couleur en fonction du taux d'humidité du fluide réfrigérant et présente par exemple la forme d'un anneau dont la couleur est donc visible au travers de l'élément 32.

Cet indicateur est agencé de façon connue en elle-même pour tenir à la pression de fonctionnement du dispositif (de l'ordre de 27 bars).

Sur la figure 4 on a représenté la vue de dessus du dispositif de la figure 1, pour montrer l'aspect de l'indicateur 29, accessible visuellement par le dessus, ce qui présente des avantages pour un utilisateur qui peut ainsi vérifier aisément le bon fonctionnement du dispositif de filtration.

La figure 5 montre un autre mode de réalisation du dispositif 35 ou bouteille selon l'invention.

Le dispositif 35 présente une pièce 36 d'obturation dont les orifices 37 et 37' d'entrée et de sortie du fluide réfrigérant sont agencés pour permettre des raccordements dans le prolongement du corps creux, et non perpendiculairement.

La pièce 36 est formée d'une demi-coque munie d'une paroi cyclindrique 36' formée d'une seule pièce avec le fond qui comporte une partie supérieure cylindrique 36'' en retrait.

La paroi est introduite à frottement dans le corps creux muni en partie haute d'une partie 38 de plus grand diamètre que le reste du corps, à laquelle elle est fixée par collage, le corps creux étant ensuite serti sur la partie en retrait 36''.

Le dispositif 35 ne diffère par ailleurs essentiellement du mode décrit en référence à la figure 1 que par la longueur du corps creux, qui est plus grande, et par la forme de la pièce 36 collée/sertie sur le corps creux, comme on vient de le voir.

Dans ce cas il est également prévu une pièce 39 de prolongation, essentiellement cylindrique, qui vient en butée contre la grille inférieure 40 du tamis filtrant. La pièce comporte une partie inférieure cylindrique en retrait 41, autour de laquelle est enfilé le ressort 42, en butée vers le haut contre un épaulement 43 dudit renfoncement, et en butée vers le bas sur le fond.

Une telle disposition permet ainsi d'optimiser la forme et le volume de la bouteille déshydratante correspondant au dispositif selon l'invention.

L'orifice d'entrée du fluide réfrigérant peut être latéral en partie haute de la bouteille ou même situé sur le fond de ladite bouteille (raccords représentés en 44 et 45 en traits interrompus sur la figure 5).

On va maintenant décrire un procédé de fabrication d'un dispositif selon l'invention.

Un tel procédé consiste à fabriquer séparément et au préalable, la tubulure contenant le tamis filtrant.

On fixe ensuite de façon simple par collage ou sertissage la tubulure sur la pièce d'obturation.

La tubulure est alors équipée du ressort de mise en pression 22.

Puis la périphérie externe inférieure de la pièce d'obturation est enduite d'un ou plusieurs cordons de colle, les éventuels joints toriques ayant été préalablement enfilés sur ladite périphérie inférieure. La pièce est ensuite mise en place et fixée par collage et par sertissage sur le corps creux.

Les avantages de l'invention par rapport à l'art antérieur sont notamment :
- un gain de poids de l'ordre de 30 à 50% par rapport aux pièces en acier ;
- un assemblage facile, sans brasure ou soudure, et donc sans risque de fuite ou d'endommagement des matériaux filtrants ;
- des pertes de charge réduites du fait d'une plus grande section de passage sur une plus grande partie du cheminement.

Comme il va de soi et comme il résulte d'ailleurs de ce qui précède, l'invention ne se limite pas aux seuls modes de réalisation décrits mais en embrasse au contraire toutes les variantes et notamment celles où l'orifice d'entrée est sur le côté du corps, ou sur le fond du corps, celles où le matériau utilisé pour le corps, comme pour la tubulure interne, est une matière plastique telle que du polyamide armé de fibre de verre ; le sertissage est effectué par filage ou par magnétoformage.

## Revendications

1. Dispositif de filtration pour circuit de fluide réfrigérant comprenant un corps creux (2) muni d'un côté d'un fond (4) et présentant de l'autre côté une ouverture (5) fermée par une pièce d'obturation (6,36), ladite pièce d'obturation comportant un orifice (8,37') de sortie du fluide directement en communication avec l'espace (16) situé à proximité du fond du corps creux (2), par l'intermédiaire d'une tubulure (13) contenant un tamis filtrant (14),
caractérisé en ce que le corps creux (2) est fixé par collage et sertissage sur la périphérie de ladite pièce d'obturation (6,36) et en ce que le dispositif comporte des moyens (22;42,39) de compression du tamis filtrant de façon à prendre en compte les variations de volume du matériau filtrant pendant le fonctionnement dudit dispositif.

2. Dispositif selon la revendication 1, caractérisé en ce que la tubulure (13) est de section transversale cylindrique au droit du tamis filtrant (14), de dimension comprise entre de l'ordre du tiers et de l'ordre des neuf dixièmes de la section interne du corps creux.

3. Dispositif selon l'une quelconque des revendications précédentes, caractérisé en ce que le corps creux (2) est une première demi-coque munie d'une paroi cylindrique et en ce que la pièce d'obturation est une seconde demi-coque (6,36) formée d'une seule pièce par un fond et une paroi cylindrique introduite à frottement dans la première demi-coque à laquelle elle est fixée par collage, la première demi-coque étant sertie sur la périphérie du fond de la deuxième demi-coque.

4. Dispositif selon la revendication 3, caractérisé en ce que la portion d'extrémité de la paroi périphérique de la deuxième demi-coque est en contact ou sensiblement en contact avec la surface interne du fond de la première demi-coque.

5. Dispositif selon l'une quelconque des revendications précédentes, caractérisé en ce qu'il comporte de plus au moins un joint torique (25) en élastomère d'étanchéité entre le corps creux et la pièce d'obturation.

6. Dispositif selon l'une quelconque des revendications précédentes caractérisé en ce que ledit orifice de sortie est en communication avec un canal intérieur (30) dans lequel est disposé un indicateur visuel (29) du taux d'humidité du fluide réfrigérant ou un voyant de remplissage.

7. Dispositif selon l'une quelconque des revendications précédentes, caractérisé en ce que la pièce d'obturation comporte un orifice d'entrée (11, 37) du fluide réfrigérant, ledit orifice communiquant avec l'espace annulaire délimité par la paroi interne du corps creux ou de la seconde demi-coque et par la paroi externe de la tubulure.

8. Dispositif selon l'une quelconque des revendications précédentes, caractérisé en ce que le corps creux (2) et la pièce (6) d'obturation sont en alliage d'aluminium.

9. Dispositif selon l'une quelconque des revendications précédentes, caractérisé en ce que la tubulure (13) est en matière plastique.

10. Dispositif selon l'une quelconque des revendications précédentes, caractérisé en ce que les moyens de compression du tamis filtrant sont des moyens à ressort (22,42,39), disposés entre le fond (4) du corps creux et une butée interne (19') à ladite tubulure.

11. Procédé de fabrication d'un dispositif de filtration d'un fluide réfrigérant à partir d'un corps creux (2) muni d'un côté d'un fond (4) et présentant de l'autre côté une ouverture (5) agencée pour être fermée par une pièce d'obturation (6,36), ladite pièce d'obturation comportant un orifice de sortie (8,37') de sortie du fluide, procédé dans lequel
- on fixe à la pièce d'obturation (6,36) et dans le prolongement de l'orifice (8,37') de sortie de fluide, une tubulure (13) contenant un tamis filtrant (14), la longueur de ladite tubulure étant telle que l'extrémité (15) de ladite tubulure soit située à proximité du fond (4) du corps creux (2) lorsque la pièce d'obturation est fixée sur ledit corps creux,
- on met en place des moyens de compression (22;42,39) du tamis filtrant, destinés à prendre en compte les variations de volume du matériau filtrant pendant le fonctionnement dudit dispositif,
- et on fixe par collage et par sertissage ledit corps creux (2) contenant ladite tubulure et lesdits moyens de compression sur la périphérie de ladite pièce d'obturation (6,36).

12. Procédé de fabrication selon la revendication 11, caractérisé en ce que le corps creux étant une première demi-coque (2) munie d'une paroi cylindrique et la pièce d'obturation une seconde demi-coque (6,36) formée d'une seule pièce par un fond et une paroi cylindrique
on enduit au moins en partie de colle polymérisable la surface interne ou externe d'au moins une des deux demi-coques (2,6,36),
on introduit la demi-coque dite interne (2), dans l'autre demi-coque dite externe (6,36), avec laquelle elle coopère à frottement ou sensiblement à frottement, jusqu'à venir sensiblement en butée contre le fond de ladite demi-coque externe, et on sertit l'extrémité de la demi-coque externe sur le fond de la demi-coque interne.

## Claims

1. Filtration device for a fluid coolant circuit comprising a hollow body (2) provided on one side with a bottom (4) and having on the other side an opening (5) closed by a closing component (6, 36), the said closing component incorporating an orifice (8, 37') for the exit of the fluid communicating directly with the space (16) located near the bottom of the hollow body (2) through the intermediary of a pipe (13) containing a filtering screen (14),
characterised in that the hollow body (2) is fixed by gluing and crimping to the periphery of the said closing component (6, 36) and in that the device incorporates means (22; 42, 39) for compressing the filtering screen in such a way as to take into account the variations in volume of the filtering material during the functioning of the said device.

2. Device according to Claim 1, characterised in that the pipe (13) has a circular transverse cross-section, in front of the filtering screen (14), whose dimension lies between about one third and about nine tenths of the internal cross-section of the hollow body.

3. Device according to any one of the preceding claims, characterised in that the hollow body (2) is a first half-shell provided with a cylindrical wall and in that the closing component is a second half-shell (6, 36) formed in a single piece by a bottom and a cylindrical well introduced with friction into the first half-shell to which it is fixed by gluing, the first half-shell being crimped to the periphery of the bottom of the second half-shell.

4. Device according to Claim 3, characterised in that the end portion of the peripheral wall of the second half-shell is in contact or substantially in contact with the inner surface of the bottom of the first half-shell.

5. Device according to any one of the preceding claims, characterised in that it comprises in addition at least one O-ring (25) made from an elastomer providing sealing between the hollow body and the closing component.

6. Device according to any one of the preceding claims, characterised in that the said exit orifice is in communication with an inner channel (30) in which is located a visual indicator (29) of the degree of humidity of the coolant fluid or a sight glass showing how full it is.

7. Device according to any one of the preceding claims, characterised in that the closing component incorporates an orifice (11, 37) for the intake of the coolant fluid, the said orifice communicating with the annular space delimited by the inner wall of the hollow body or of the second half-shell and by the outer wall of the pipe.

8. Device according to any one of the preceding claims, characterised in that the hollow body (2) and the closing component (6) are made of an aluminium alloy.

9. Device according to any one of the preceding claims, characterised in that the pipe (13) is made of a plastic material.

10. Device according to any one of the preceding claims, characterised in that the means of compressing the filtering screen consist of a spring (22, 42, 39) placed between the bottom (4) of the hollow body and an internal stop (19') on the said pipe.

11. Method of manufacturing a device for the filtration of a coolant fluid from a hollow body (2) provided on one side with a bottom (4) and having on the other side an opening (5) arranged to be closed by a closing component (6, 36), the said closing component incorporating an exit orifice (8, 37') for the exit of the fluid, a method in which
- a pipe (13) containing a filtering screen (14) is fixed to the closing component (6, 36) along the extension of the orifice (8, 37') for the exit of the fluid, the length of the said pipe being such that the end (15) of the said pipe is located near the bottom (4) of the hollow body (2) when the closing component is fixed to the said hollow body,
- the means (22; 42, 39) for compressing the filtering screen are installed, these means being intended to take into account the variations in volume of the filtering material during the functioning of the said device,
- and the said hollow body (2) containing the said pipe and the said means of compression is fixed by gluing or crimping to the periphery of the said closing component (6, 36).

12. Method of manufacture according to Claim 11, characterised in that, the hollow body being a first half-shell (2) provided with a cylindrical wall and the closing component being a second half-shell (6, 36) formed in a single piece by a bottom and a cylindrical wall,
- the inner or outer surface of at least one of the two half-shells (2, 6, 36) is coated at least in part with a polymerisable glue,
- the so-called inner half-shell (2) is introduced into the so-called outer half-shell (6, 36), with which it cooperates with friction or substantially with friction, until it comes substantially to abut against the bottom of the said outer half-shell, and the end of the outer half-shell is crimped on to the bottom of the inner half-shell.

## Patentansprüche

1. Filtriervorrichtung für einen Kühlfluidkreislauf, aufweisend einen Hohlkörper (2), der auf einer Seite einen Boden (4) und auf der anderen Seite eine Mündung (5) besitzt, die durch ein Verschlußstück (6, 36) verschlossen ist, welches Verschlußstück eine Ausgangsöffnung (8, 37') des Fluides aufweist, welche in direkter Verbindung mit einem Raum (16) benachbart zum Boden des Hohlkörpers (2) steht, über die Zwischenschaltung eines Rohrstutzens (13), welcher ein Filtersieb (14) enthält,
**dadurch gekennzeichnet,**
**daß** der Hohlkörper (2) mittels Kleben oder Crimpen (Falzen) auf dem Umfang des Verschlußstücks (6, 36) befestigt ist und
**daß** die Vorrichtung Mittel (22; 42, 39) zum Zusammendrücken des Filtersiebes aufweist, derart, daß sie Volumenänderungen des Filtermaterials abhängig von der Betriebsweise der Vorrichtung aufnimmt.

2. Vorrichtung nach Anspruch 1,
**dadurch gekennzeichnet,**
**daß** der Rohrstutzen (13) im Querschnitt zylindrisch entsprechend dem Filtersieb (14) ist, wobei die Dimension in der Größenordnung zwischen 1/3 und 9/10 des Innenquerschnitts des Hohlkörpers liegt.

3. Vorrichtung nach einem der vorstehenden Ansprüche,
**dadurch gekennzeichnet,**
**daß** der Hohlkörper (2) eine erste Halbschale versehen mit einer zylindrischen Wandung ist und daß das Verschlußstück eine zweite einstückig ausgebildete Halbschale (6, 36) ist mit einem Boden und daß eine zylindrische Wandung in Reibung in die erste Halbschale eingefügt und in dieser mittels Klebung befestigt ist, wobei die erste Halbschale auf dem Umfang des Bodens der zweiten Halbschale gecrimpt ist.

4. Vorrichtung nach Anspruch 3,
**dadurch gekennzeichnet,**
**daß** der äußere Abschnitt der Umfangswandung der zweiten Halbschale in Kontakt oder fast in Kontakt mit der inneren Oberfläche des Bodens der ersten Halbschale ist.

5. Vorrichtung nach einem der vorstehenden Ansprüche,
**dadurch gekennzeichnet,**
**daß** sie darüber hinaus eine O-Ring-Dichtung (25) aus einem Elastomer zwischen dem Hohlkörper und dem Verschlußstück aufweist.

6. Vorrichtung nach einem der vorstehenden Ansprüche,
**dadurch gekennzeichnet,**
**daß** die Ausgangsöffnung in Verbindung ist mit einem inneren Kanal (30), in welchem ein Sichtindikator (29) für den Grad der Feuchtigkeit des Kühlfluids oder ein Füllstandsanzeiger angeordnet ist.

7. Vorrichtung nach einem der vorstehenden Ansprüche,
**dadurch gekennzeichnet,**
**daß** das Verschlußstück eine Eingangsöffnung (11, 37) für das Kühlfluid aufweist, welche Öffnung in Verbindung steht mit einem Ringraum, der von der Innenwandung des Hohlkörpers oder von der zweiten Halbschale und von der Außenwandung des Rohrstutzens begrenzt wird.

8. Vorrichtung nach einem der vorstehenden Ansprüche,
**dadurch gekennzeichnet,**
**daß** der Hohlkörper (2) und das Verschlußstück (6) aus einer Aluminiumlegierung bestehen.

9. Vorrichtung nach einem der vorstehenden Ansprüche,
**dadurch gekennzeichnet,**
**daß** der Rohrstutzen (13) aus einem Kunststoffmaterial besteht.

10. Vorrichtung nach einem der vorstehenden Ansprüche,
**dadurch gekennzeichnet,**
**daß** die Mittel zur Kompression des Filtersiebs Federmittel (22, 42, 39) sind, angeordnet zwischen dem Boden (4) des Hohlkörpers und einer inneren Schulter (19') des Rohrstutzens.

11. Herstellungsverfahren für eine Filtriervorrichtung für ein Kühlfluid ausgehend von einem Hohlkörper (2), der auf der einen Seite einen Boden (4) und auf der anderen Seite eine Mündung (5) besitzt, geeignet um durch ein Verschlußstück (6, 36) verschlossen zu werden, welches Verschlußstück eine Ausgangsöffnung (8, 37') für den Ausgang des Fluides aufweist, in welchem Verfahren
- an dem Verschlußstück (6, 36) und in der Verlängerung der Ausgangsöffnung (8, 37') des Fluides ein Rohrstutzen (13) befestigt wird, welcher ein Filtersieb (14) enthält, wobei die Länge des besagten Rohrstutzens so ist, daß die äußersten Enden (15) des Rohrstutzens benachbart zum Boden (4) des Hohlkörpers (2) liegen, wenn das Verschlußstück auf dem Hohlkörper befestigt ist,
- die Kompressionsmittel (22; 42, 39) des Filtersiebes plaziert und so eingestellt werden, daß sie Volumenänderungen des Filtermaterials abhängig von der Betriebsweise der Vorrichtung aufnehmen,
- und mittels Kleben und mittels Crimpen (Falzen) der Hohlkörper (2) enthaltend den Rohrstutzen und die Kompressionsmittel auf dem Umfang des Verschlußstückes (6, 36) befestigt wird.

12. Herstellungsverfahren nach Anspruch 11,
**dadurch gekennzeichnet,**
**daß** der Hohlkörper eine erste Halbschale (2) ausgerüstet mit einer zylindrischen Innenwandung ist und das Verschlußstück eine zweite einstückig ausgebildete Halbschale (6, 36) mit einem Boden und einer zylindrischen Innenwandung ist,
**daß** ein polymerisierbares Fügeteil auf der inneren Oberfläche oder der äußeren Oberfläche mittels einer der beiden Halbschalen (2, 6, 36) aufgetragen wird,
**daß** die innere (2) Halbschale in die andere äußere Halbschale (6, 36) eingeführt wird, mit welcher sie durch Reibung oder Reibungsempfindlichkeit zusammenwirkt, bis es gerade zum Anstoßen gegen den Boden der äußeren Halbschale kommt und der äußere Umfang der äußeren Halbschale auf dem Boden der inneren Halbschale gecrimpt (gefalzt) wird.
